**Europäisches Patentamt**

**European Patent Office**

**Office européen des brevets**

(19)

(11) Veröffentlichungsnummer: **0 183 268 B1**

# EUROPÄISCHE PATENTSCHRIFT

(12)

(45) Veröffentlichungstag der Patentschrift: **06.11.91**

(51) Int. Cl.⁵: **H04M 1/10**, H04M 1/18

(21) Anmeldenummer: **85115105.0**

(22) Anmeldetag: **28.11.85**

(54) **Auflage für den Bedienhörer eines Autotelefons.**

(30) Priorität: **29.11.84 DE 3443645**

(43) Veröffentlichungstag der Anmeldung:
**04.06.86 Patentblatt 86/23**

(45) Bekanntmachung des Hinweises auf die
Patenterteilung:
**06.11.91 Patentblatt 91/45**

(84) Benannte Vertragsstaaten:
**DE**

(56) Entgegenhaltungen:
**DE-A- 849 118**
**DE-A- 2 009 599**
**FR-A- 2 224 947**
**US-A- 2 623 128**
**US-A- 4 609 785**

(73) Patentinhaber: **SIEMENS AKTIENGESELL-
SCHAFT**
**Wittelsbacherplatz 2**
**W-8000 München 2(DE)**

(72) Erfinder: **Kiesewetter, Arno Reinhold**
**Brachvogelweg 5 b**
**W-8056 Neufahrn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung bezieht sich auf eine Auflage für den Bedienhörer eines Autotelefons, bei der mittels eines in der Auflage angeordneten Magneten und einer in den Bedienhörer eingelegten Platte aus magnetischem Material der Bedienhörer in seiner Lage festgehalten wird.

Aus der US-A-2 623 128 ist eine Anordnung mit einem Handset und einer zugehörigen Auflage bekannt, bei der die Auflage die Form eines üblichen Telefon-Tischapparates aufweist mit einer Gabel, auf die der Telefonhörer (Handset) aufgelegt wird. Diese Gabel hat zugleich die Funktion der Betätigung des Gabelumschalters (switchhook), der beim Abheben und Auflegen des Bedienhörers einen Verbindungsaufbau ermöglicht bzw. eine bestehende Telefonverbindung auflöst. Im Mittelbereich der Auflage ist ein U-förmiger Permanentmagnet befestigt, der mit einer im Mittelteil des Handsets angebrachten Platte aus magnetischem Material zusammenwirkt und damit das Handset auf der Auflage festhält.

Die Ausrüstung von Fahrzeugen mit Kommunikationsmitteln, insbesondere mit Autotelefonen, macht es erforderlich, das im Fahrzeug sehr geringe Platzangebot so zu nutzen, daß die notwendigen Geräte zur Kommunikation so klein wie möglich werden. Dies geschieht durch einen mit Anzeige- und Wahlelementen versehenen Bedienhörer und eine dazu passende Halterung.

Bei bisherigen Ausführungsformen bestanden Autotelefone aus einer Bedieneinheit mit Anzeige- und Wahleinrichtung und einem separaten Sprechhörer. Die Bedieneinheit war entweder in einem entsprechenden Ausschnitt im Armaturenbrett oder in einer besonderen Konsole im Fahrgastraum untergebracht. Der Sprechhörer benötigte zusätzlich eine Auflage, die dessen Maße erheblich überschritt. Beim Abnehmen oder Auflegen des Sprechhörers wurde ein mechanischer Kontakt, der sog. Gabelumschalter geöffnet oder geschlossen. Der Gabelumschalter war dabei so ausgebildet, daß er den Sprechhörer über federnde Rasthalterungen in seiner Lage fixierte.

Der Erfindung liegt die Aufgabe zugrunde, eine in ihrem Aufbau einfache, platzsparende Auflage für einen Bedienhörer zu schaffen, der zugleich alle Anzeige- und Wahleinrichtungen eines ansonsten üblichen separaten Bediengerätes mit enthält.

Diese Aufgabe wird gemäß der Erfindung gelöst durch eine Auflage, bestehend aus einem plattenförmigen Unterteil, dessen Längenausdehnung etwa einem Drittel der Länge des Bedienhörers entspricht sowie dessen Breite nicht übersteigt, und einem auf dieses aufsetzbaren kappenförmigen Oberteil, das in seinem für die Aufnahme des die Hörmuschel enthaltenden Teiles des Bedienhörers vorgesehenen Bereich eine entsprechend ausgeformte Vertiefung aufweist und in seinem erhöhten Bereich mit zwei schlitzförmigen Ausnehmungen und einer darunterliegenden topfförmigen Ausformumg versehen ist, in der zwei beweglich angeordnete Haltebleche mit dazwischenliegendem Magneten so angeordnet sind, daß sie durch die beiden Schlitze der Auflagenoberseite hindurchragen und mit der gegenüberliegend angeordneten Magnetplatte des Bedienhörers zusammenhaften.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispieles näher erläutert.

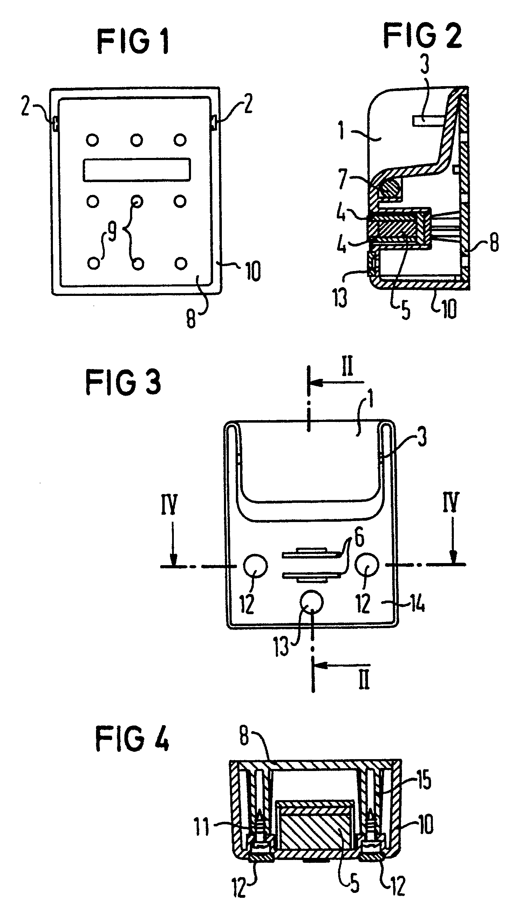

Die Figuren 1 bis 4 zeigen die Auflage in einer Unteransicht, einem Schnitt in Längsrichtung, einer Draufsicht und einem Schnitt in Querrichtung.

Die Auflage für den in der Zeichnung nicht dargestellten Bedienhörer, der alle Anzeige- und Wahleinrichtungen enthält, hat quaderförmige Gestalt und besteht aus einem plattenförmigen Unterteil 8 und einem kappenförmigen, das Unterteil 8 am Rand umschließenden Oberteil 10. Unterteil 8 und Oberteil 10 sind über Schrauben 11 miteinander verbunden, die in Vertiefungen des Oberteils 10 eingesetzt sind und in hülsenförmige Ansätze 15 an der Innenseite des Unterteiles 8 eingreifen.

Die Auflage ist so gestaltet, daß sie lediglich etwa einem Drittel der Größe des Bedienhörers entspricht. Für die Aufnahme und Halterung des Bedienhörers weist der obere Teil des Oberteils 10 eine Vertiefung 1 auf, die dem Hörmuschelteil des Bedienhörers angeglichen ist. Im Bereich der seitlichen Anlage des Bedienhörers innerhalb der Vertiefung 1 sind in senkrecht verlaufenden Schlitzen 3 des Oberteils 10 der Auflage aus weichem Material, vorzugsweise Kunststoff, bestehende Keile 2 angeordnet. Dadurch wird ein seitliches Spiel zwischen Bedienhörer und Auflage ausgeglichen.

Der untere, erhöhte Teil 14 des kappenförmigen Oberteils 10 ist mit zwei parallel verlaufenden schlitzförmigen Ausnehmungen 6 und einer darunterliegenden topfförmigen Ausformung versehen. In diese Ausformung werden von der Unterseite her zwei Haltebleche 4 mit einem dazwischenliegenden Magneten 5 so angeordnet, daß sie durch die beiden Schlitze 6 der Auflagenoberseite hindurchragen und durch die Magnetwirkung eine in den Bedienhörer eingelegte Stahlplatte und damit den Bedienhörer selbst in seiner Lage festhalten.

Die Haltebleche 4 sind dabei zum Toleranzausgleich in der Auflage beweglich angeordnet und ermöglichen so eine flächige Anlage der Oberseite der Haltebleche an die im Bedienhörer eingelegte Stahlplatte. Die Funktion des Gabelumschalters wird dadurch erreicht, daß ein in einen Hohlraum des Oberteils 10 eingelegter zusätzlicher Magnet 7, vorzugsweise ein Rundmagnet, ein im Bedienhörer in entsprechender Lage angeordnetes Reedrelais betätigt, das damit u.a. den Gesprächsaufbau ermöglicht. Zusätzlich wird durch diesen Rundmagneten 7 über ein im Bedienhörer angeordnetes zweites Reedrelais beim Abheben des Hörers die im aufgelegten Zustand maximale Lautstärke eines ankommenden Rufsignals so geregelt, daß keine schmerzhaften Reize für den Benutzer beim Gespräch entstehen.

Das plattenförmige Unterteil 8 weist eine Reihe von Bohrungen 9 auf, über die die Auflage mittels Schrauben an einer Montagefläche im Fahrzeug befestigt wird. Nach der Befestigung des Unterteils 8 an der Befestigungsfläche erfolgt die Verschraubung des Unterteils 8 mit dem Oberteil 10 der Auflage. Die Vertiefungen zur Aufnahme der beiden Schrauben 11 in dem Oberteil 10 werden anschließend durch zwei, über die Auflagenoberseite hervorragende Abdeckkappen 12 verschlossen. Eine dritte, ebenso wie die Abdeckkappen 12 aus weichem Material hergestellte Abdeckkappe 13, die etwas aus der Auflagenoberseite hervorsteht, erfüllt dabei mit den beiden anderen Abdeckkappen 12 den Zweck, ein Gegenlager zu den beiden ebenfalls vorstehenden Magnethalteblechen zu bilden, um ein Klappern während der Fahrt zu vermeiden.

Bezugszeichenliste

| 1 | Vertiefung am Oberteil |
| 2 | Keile |
| 3 | Schlitze |
| 4 | Haltebleche |
| 5 | Magnet |
| 6 | Ausnehmungen |
| 7 | Magnet |
| 8 | Unterteil |
| 9 | Bohrungen |
| 10 | Oberteil |
| 11 | Schrauben |
| 12, 13 | Abdeckkappen |
| 14 | erhöhter Teil des Oberteils |
| 15 | hülsenförmige Ansätze |

## Patentansprüche

1. Auflage für den Bedienhörer eines Autotelefons, bei der mittels eines in der Auflage angeordneten Magneten und einer in den Bedienhörer eingelegten Platte aus magnetischem Material der Bedienhörer in seiner Lage festgehalten wird,
**gekennzeichnet durch**
ein plattenförmiges Unterteil (8), dessen Längenausdehnung etwa einem Drittel der Länge des Bedienhörers entspricht sowie dessen Breite nicht übersteigt, und ein auf dieses aufsetzbares kappenförmiges Oberteil (10), das in seinem für die Aufnahme des die Hörmuschel enthaltenden Teils des Bedienhörers vorgesehenen Bereich eine entsprechend ausgeformte Vertiefung (1) aufweist und in seinem erhöhten Bereich (14) mit zwei schlitzförmigen Ausnehmungen und einer darunterliegenden topfförmigen Ausformung versehen ist, in der zwei beweglich angeordnete Haltebleche (4) mit einem dazwischenliegenden Magneten (5) so angeordnet sind, daß sie durch die beiden Schlitze (6) der Auflagenoberseite hindurchragen und mit der gegenüberliegend angeordneten Magnetplatte des Bedienhörers zusammenhaften.

2. Auflage nach Anspruch 1,
**dadurch gekennzeichnet,**
daß im Bereich der seitlichen Anlage des Bedienhörers innerhalb der Vertiefung (1) in senkrecht verlaufenden Schlitzen (3) des Oberteils (10) der Auflage eingesetzte Keile (2) aus weichem Material, vorzugsweise Kunststoff, angeordnet sind.

3. Auflage nach Anspruch 1 oder 2,
**dadurch gekennzeichnet,**
daß das Unterteil (8) der Auflage an der dem Oberteil (10) zugekehrten Fläche mit hülsenförmigen Ansätzen (15) versehen ist, in die das Oberteil (10) mit dem Unterteil (8) verbindende Schrauben (11) eingreifen.

4. Auflage nach Anspruch 3,
**dadurch gekennzeichnet,**
daß Öffnungen im Oberteil (10) zur Aufnhame der Schrauben (11) mit die Oberfläche überragenden Abdeckkappen (12) verschlossen sind.

5. Auflage nach Anspruch 4,
**dadurch gekennzeichnet,**
daß zusätzlich eine weitere, aus der Oberteiloberseite hervorstehende Abdeckkappe (13) vorgesehen ist.

6. Auflage nach Anspruch 4 oder 5,
**dadurch gekennzeichnet,**
daß die Abdeckkappen (12, 13) aus einem weichen Material bestehen.

7. Auflage nach einem der Ansprüche 1 bis 6,
**dadurch gekennzeichnet,**
daß im Innenraum des Oberteils (10) ein weiterer Magnet (7) angeordnet ist, der ein im Bedienhörer in entsprechender Lage angeordnetes Reedrelais betätigt.

8. Auflage nach einem der vorhergehenden Ansprüche,

**dadurch gekennzeichnet,**

daß die Befestigung im Fahrzeug durch Verschraubung des Unterteils (8) an einer Befestigungsfläche erfolgt.

## Claims

1. Rest for the handset of a car telephone, in which the handset is retained in its position by means of a magnet arranged in the rest and of a plate of magnetic material inserted in the handset, characterised by a plate-shaped lower part (8), whose longitudinal extent corresponds approximately to one third of the length of the handset and does not exceed the width thereof, and a cap-shaped upper part (10), which can be placed on said lower part, and exhibits a correspondingly shaped depression (1) in its region provided for holding the part of the handset containing the earpiece and which, in its raised region (14), is provided with two slot-shaped recesses beneath which there is a pot-shaped cavity in which two sheet-metal holders (4), arranged in a movable manner with a magnet (5) located between them, are arranged such that they protrude through the two slots (6) of the upper side of the rest and cohere with the opposingly arranged magnetic plate of the handset.

2. Rest according to Claim 1, characterised in that wedges (2) of soft material, preferably plastic, are arranged within the depression (1), in the region of the side structure of the handset and are inserted in vertically running slots (3) of the upper part (10) of the rest.

3. Rest according to Claim 1 or 2, characterised in that the lower part (8) of the rest is provided with sleeve-shaped projections (15) on the surface facing the upper part (10), into which screws (11) connecting the upper part (10) to the lower part (8) engage.

4. Rest according to Claim 3, characterised in that the openings in the upper part (10) for holding the screws (11) are closed by means of covering caps (12) overlapping the surface.

5. Rest according to Claim 4, characterised in that a further covering cap (13) is additionally provided, standing proud of the top side of the upper part.

6. Rest according to Claim 4 or 5, characterised in that the covering caps (12, 13) consist of a soft material.

7. Rest according to one of Claims 1 to 6, characterised in that, arranged in the interior of the upper part (10) is a further magnet (7) which operates a reed relay arranged in a corresponding position in the handset.

8. Rest according to one of the preceding claims, characterised in that mounting in the vehicle is carried out by screwing the lower part (8) to a mounting surface.

## Revendications

1. Support pour l'écouteur d'un radiotéléphone, dans lequel l'écouteur est maintenu dans une position fixe au moyen d'un aimant disposé dans le support et d'une plaque en matériau magnétique insérée dans l'écouteur, caractérisé par une partie inférieure en forme de plaque (8), dont l'étendue longitudinale correspond approximativement au tiers de la lonngueur de l'écouteur et ne dépasse pas la largeur de ce dernier, et une partie supérieure en forme de capot (10), pouvant être montée sur la partie inférieure et comportant, dans sa partie destinée à loger la partie de l'écouteur contenant la capsule réceptrice, un renfoncement de forme correspondante (1) et, dans sa partie surélevée (14), deux ouvertures en forme de fentes et une partie sous-jacente en forme de pot, dans laquelle deux tôles de maintien mobiles (4), entre lesquelles est intercalé un aimant (5), sont disposées de manière à traverser les deux fentes (6) de la face supérieure du support et adhèrent à la plaque magnétique, située en vis-à-vis, de l'écouteur.

2. Support suivant la revendication 1, caractérisé par le fait que des coins (2) réalisés en un matériau mou, de préférence en matière plastique, sont disposés dans la zone d'application latérale de l'écouteur dans le renfoncement (1), dans des fentes verticales (3) de la partie supérieure (10) du support.

3. Support suivant la revendication 1 ou 2, caractérisé par le fait que la partie inférieure (8) du support comporte, au niveau de la surface tournée vers la partie supérieure (10), des embouts saillants en forme de douilles (15), dans lesquels s'engagent des vis (11) reliant la partie supérieure (10) à la partie inférieure (8).

4. Support suivant la revendication 3, caractérisé par le fait que des ouvertures ménagées dans la partie supérieure (10) servant à loger les vis (11) sont fermées par des bouchons de fermeture (12) qui sont disposés en saillie sur la surface.

5. Support suivant la revendication 4, caractérisé par le fait qu'il est en outre prévu un autre capuchon de fermeture (13) qui fait saillie sur la surface de la partie supérieure.

6. Support suivant la revendication 4 ou 5, caractérisé par le fait que les capuchons de fermeture (12,13) sont réalisés en un matériau mou.

7. Support suivant l'une des revendications 1 à 6, caractérisé par le fait que dans l'espace intérieur de la partie supérieure (10) est disposé un autre aimant (7), qui actionne un relais à lame disposé dans une position correspondante dans l'écouteur.

8. Support suivant l'une des revendications précédentes, caractérisé par le fait que la fixation dans le véhicule est réalisée par vissage de la partie inférieure (8) sur une surface de fixation.

FIG 1

FIG 2

FIG 3

FIG 4